# EUROPEAN PATENT SPECIFICATION

(11) **EP 3 165 312 B1**
(45) Date of publication and mention of the grant of the patent: **22.02.2023**
(21) Application number: 16191687.9
(22) Date of filing: 30.09.2016
(51) Int. Cl.: B23D 45/02, B23D 47/02

(54) **MITRE SAW WITH SLIDE RODS**
GEHRUNGSSÄGE MIT SCHIEBERSTANGEN
SCIE À ONGLETS AVEC TIGE GLISSIÈRE

(30) Priority: 06.11.2015 GB 201519661; 19.11.2015 GB 201520422
(43) Date of publication of application: 10.05.2017
(73) Proprietor: Black & Decker Inc., New Britain, CT 06053 (US)
(72) Inventor: Bettacchini, Marcello, 06073 Ellera di Corciano (IT); Ginocchini, Lucio, 06132 San Sisto (IT); Mortaro, Matteo, 06055 Marsciano (IT)
(74) Representative: SBD IPAdmin

(56) References cited:
- EP-A1- 2 689 878
- CZ-U1- 18 511

## Description

The present invention relates to a saw.

EP2689878 describes a sliding compound mitre saw and comprises all of the features in the pre-charactersing portion of claim 1.. Such saws comprise a cutting unit moveably mounted on a base assembly. An electric motor is mounted in the cutting unit which is capable of rotationally driving as cutting blade mounted on a spindle which projects from the cutting unit. A sliding compound mitre saw can perform chop cuts, bevel cuts, mitre cuts and sliding cuts on work pieces located on the base assembly. US1400297 described an alternative design of sliding compound mitre saw.

CZ18511U discloses a saw mounted on top of two parallel and horizontal fixed rails.

The present invention relates to an improvement in the sliding mechanism of a saw at least capable of making sliding cuts.

Accordingly, there is provided a saw in accordance with claim 1.

An embodiment of the present invention will now be described with reference to accompanying drawings of which:
Figure 1 shows a perspective view of a mitre saw in accordance with the present invention;
Figure 2 shows an exploded view of the pivot joint of the mitre saw from a first perspective;
Figure 3 shows an exploded view of the pivot joint from a second perspective;
Figure 4 shows an exploded view of the spring and cup shaped section;
Figure 5 shows a schematic diagram of a cross sectional view of the pivot joint;
Figure 6 shows a side view of the guide rods in the cutting unit;
Figure 7 shows the motor mount with slide bearings;
Figure 8 shows an exploded view of the motor mount with slide bearings;
Figure 9 shows an alternative design for the guide rods for a mitre saw which is outside of the scope of the present invention;
Figure 10 shows the guide rods of Figure 10;
Figure 11 shows a top view of the side handle;
Figure 12 shows an underside view of the side handle; and
Figure 13 shows an exploded view of the side handle.

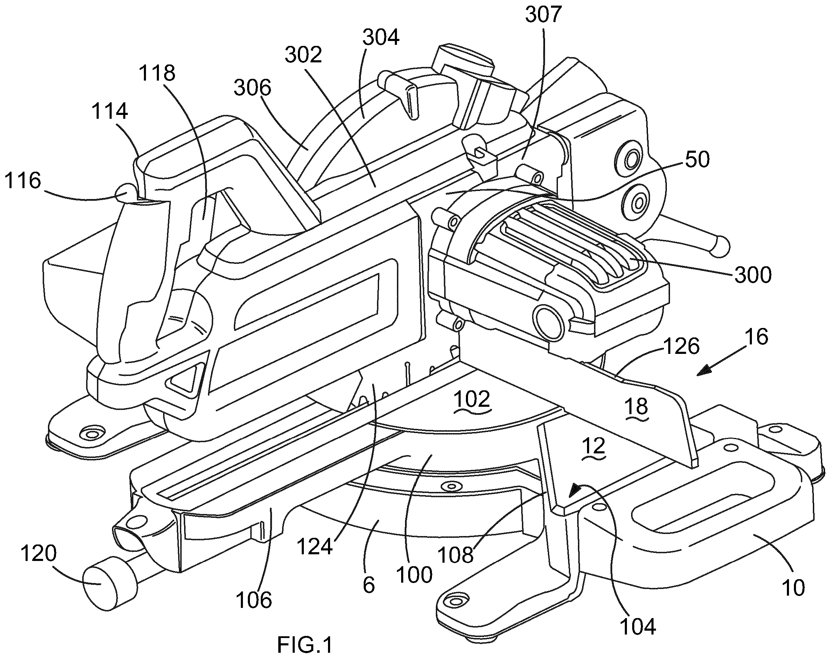

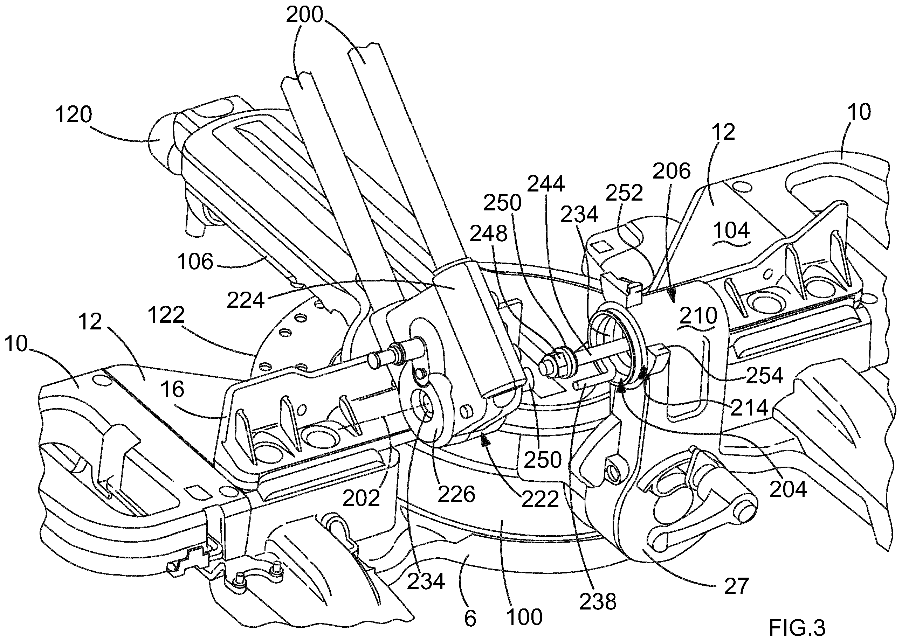

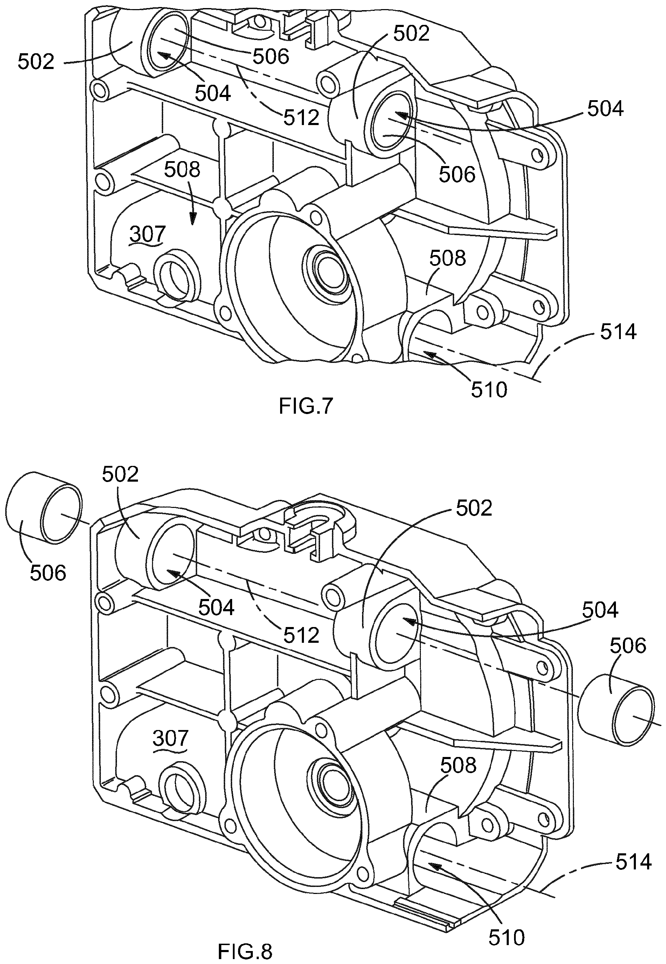

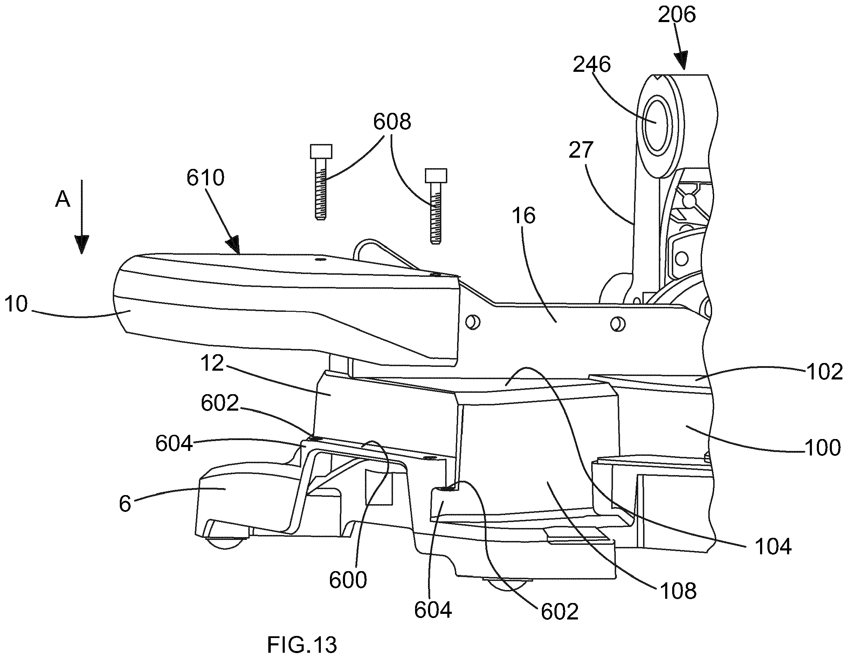

A saw in accordance with scope of the present invention will now be described with reference to Figures 1 to 8 and Figures 11 to 13.

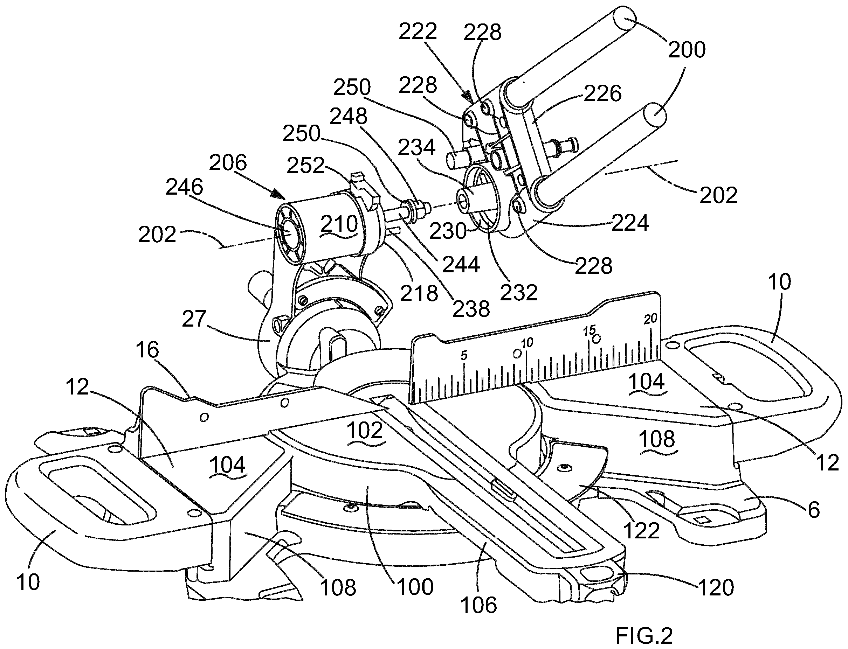

Referring to Figure 1, the mitre saw comprises a base structure 6, 100 comprising a base 6 and a rotatable table 100. The base 6 has two platforms 12 formed symmetrically on either side of the base 6. Rotatably mounted on the base 6 between the two platforms 12 is the rotatable table 100, the top surface 102 of which is flat and lies flush with the flat top surfaces 104 of the two platforms 12. The combined surfaces 102, 104 of the platforms 12 and rotatable table 100 form a work surface. An extension arm 106 is rigidly attached to the rotatable table 100 which extends forward in well-known manner. The rotatable table 100 and extension arm 106 can pivot about a vertical axis through a range of angular positions, the angular movement being restricted by the extension arm 106 engaging with one or other of the sides 108 of the platforms 12. A locking lever 120 can be used to lock the rotatable table 100 and extension arm 106 in desired angular positions. A scale 122 (shown in Figures 2 to 4) is attached to the base 6 to indicate the angular position of the extension arm 106.

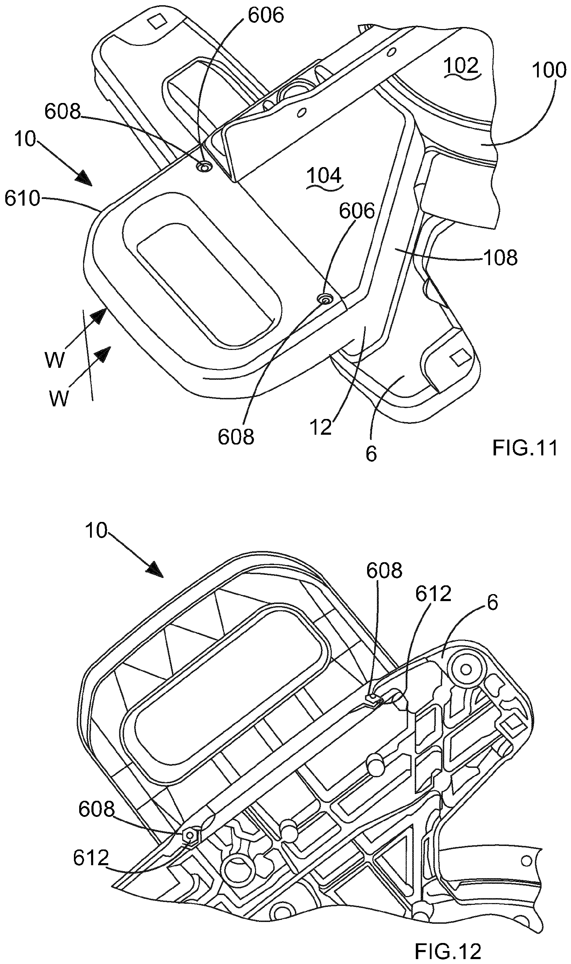

Carrying handles 10 are attached to the sides of the base 6 which will now be described with reference to Figures 11 to 13.

Each handle 10 is a D shaped handle made from plastic. A ledge 600 is formed on each side of the base 6 adjacent the outer side of each platform 12. Two posts 604 are formed in the base 6 on each side of each ledge 600, each of which comprises an aperture 602 with a threaded section. The threaded section can be provided using a nut 612 as shown or may be integrally formed in the wall of the aperture 602 form in the post 604. Each handle 10 comprises a recess (not shown) which has corresponding dimensions to those of the ledges 600. When attaching the handles 10 to the base, each handle 10 is lowered (Arrow A) onto the base 6 from above the base 6. When each handle 10 is mounted on the base 6, each ledge 600 locates within the recess of each handle 10. Two apertures 606 are formed through each handle in corresponding positions to the threaded apertures 602 in the base 6. Bolts 608 are passed through the apertures 606 and screwed into the threaded apertures 602 of the posts 604 to secure each handle 10 to the base 6. The top surfaces 610 of each handle 10 are flat and lie flush with the top surfaces 102, 104 of the two platforms 12 and rotatable table 100. The surfaces 610 of the handle 10 therefore extend the work surface formed by the combined surfaces 610 102, 104 of the platforms 12 and rotatable table 100.

Pivotally mounted on the rear of the rotatable table 100 is a mount 27 to form a bevel joint. The mount 27 can pivot about a horizontal axis relative to the rotatable table 100 to enable the saw to perform bevel cuts. Two guide rods 200 are pivotally attached to the mount 27 via a pivot joint which is described in more detail below. Slideably mounted on the two guide rods is a cutting unit 50.

The external housing of the cutting unit is constructed from five clam shells 300, 302, 304, 306, 307. The first clam shell 300 forms a motor housing in which is mounted an electric motor (not shown). The first clam shell 300 is attached to the fifth clam shell 307 using bolts. The fifth clam shell 307 forms a motor mount for the electric motor. The fifth clam shell 307 supports the guide mechanism for the two guide rods 200 and supports the cutting unit 50 on the guide rods 200 and which is described in more detail below. The fifth clam shell 307 is made from aluminium which is unlike the four other clam shells 300, 302, 304, 306 which are made from plastic.

The fifth clam shell is attached to the second clam shell 302 using bolts. The second and third clam shells 302, 304 are attached to each other using bolts and which, in addition to the fifth clam shell 307, form a guide rod support housing, in which are slideably mounted the two guide rods 200. The second and third clam shells 302, 304 also form half of the fixed blade guard, which fixed blade guard surrounds the top section of a cutting blade 124 which is mounted on an output spindle 500 of the motor. The fourth clam shell 306 attaches to the third clam shell 304 and forms the second half of the fixed blade guard.

The pivot joint enables the two rods 200 and the cutting unit 50 to pivot about an axis 202 relative to the mount 27 to enable the two rods 200 and the cutting unit 50 to pivot away from or towards the rotatable table 100 and extension arm 106. This enables the saw to perform chop cuts. A spring 204, which forms part of the pivot joint, biases the mount 27 and guide rods to their highest position. A handle 114 is attached to the front of the cutting unit 50 by which a user manoeuvres the cutting unit 50 relative to the base structure. The mount 27 automatically locks in its uppermost pivotal position by a latch mechanism (not shown). A pivotal lever 116 is mounted on the handle 114 by which an operator can release the latch mechanism. A switch 118 is also mounted on the handle 114, the depression of which activates the electric motor.

Rigidly attached on top of the two platforms 12 of the base 6 at the rear of the platforms 12 is a fixed fence 16. The fence 16 extends across the rotatable table 100 but does not interfere with its rotational movement.

The pivot joint will now be described in more detail with reference to Figures 2 to 5.

The mount 27, which is manufactured from aluminium, comprises a curved wall 210 sealed at one end by an end wall 212 to form a cup shaped section 206 enclosing a tubular passage 208 of uniform circular cross section. Formed around the open end cup shaped section 206 are two walls 216, 218 to form a groove 214. An aperture 220 is formed through the centre of the end wall 212.

Rigidly attached to the end of the two guide rods 200 is a base 222 which holds the two guide rods 200 in position. The base 222 comprises two metal clam shells 224, 226 which are clamped around the end of the guide rods 200 and secured to each other and the guide rods using bolts 228.

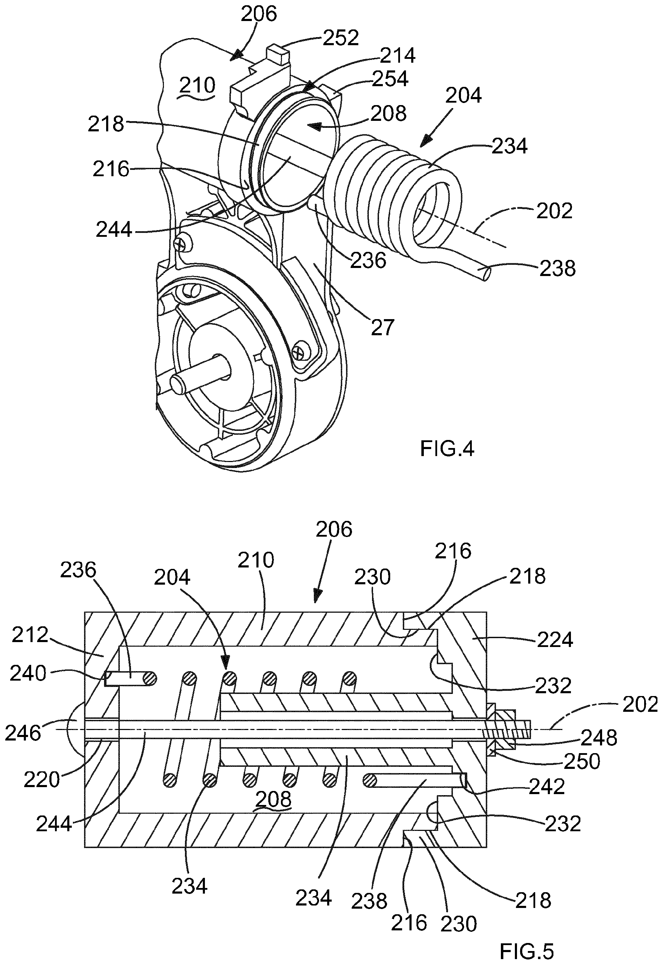

One of the clam shells 224 comprises a circular wall 230 which connects to a circular base 232 formed on the side of the clam shell 224. The size and dimensions of the circular wall 230 are such that it is capable of mating with the groove 214 of the cup shaped section 206 as best seen in Figure 5. When the circular wall 230 is mated with the groove 214 of the cup shaped section 206, the end of the cup shape section 206 abuts against circular base 232.

Extending from the clam shell 224 at the centre of the circular wall 230 and in parallel to the circular wall 230 is an elongate tube 234. When the circular wall 230 is mated with the groove 214 of the cup shaped section 206, the elongate tube 234 extends into the tubular passage 208 as best seen in Figure 5.

The pivot joint comprises the spring 204 which has a central coiled section 234 and two straight ends 236, 238.

When the pivot joint assembled, the circular wall 230 is mated with the groove 214 of the cup shaped section 206. The spring 204 is located inside of the tubular passage 208 with the coiled section surrounding the elongate tube 234. One of the straight ends 236 locates within a recess 240 formed in the end wall 212 of the cup shaped section 206 to attach it to the cup shaped section 206. The other straight end 238 locates in a second recess 242 formed in the clam shell 224 inside of the circular base 232 to attach it to the clam shell 224. A bolt 244 is passed through the aperture 220 in the end wall 212 and through the elongate tube 234. The head 246 of the bolt 244 locates against the outside of the end wall 212. A nut 248 and a washer 250 are screwed on the free end the bolt 244 and abut against the end of the elongate tube as best seen in Figure 5. The bolt 244 secures the cup shaped section 206 to the circular wall 230 with the circular wall 230 mated with the groove 214 of the cup shaped section 206. When the bolt 244 secures the cup shaped section to the circular wall 230, the clam shell 224 in combination with the cup shaped section 206 form a sealed enclosed space 208 in which the spring 204 is located. The longitudinal axis of the bolt 244 is co-axial with the axis 202 of rotation.

The base 222 can pivot on the mount 27 about axis 202 by the circular wall 230 rotating around the groove 214 whilst remaining mated to it. As the base 222 pivots on the mount 27, the cup shape section 206 and/or the circular wall 230 rotates around the bolt 244. The base 222 is pivotally supported on the mount 27 by the engagement of circular wall 230 and the groove 214. As the circular wall 230 rotates within the groove 214, one straight end 236 of the spring 204 rotates relative to the other end 238, storing a spring force in the coiled section 234. The spring 204 applies a biasing force between the cup shaped section 206 and the clam shell 224. The spring 204 is arranged to urge the two guide rods 200 to urge them to point upwardly and move the cutting unit 50 to its highest position. The angular movement of the base 222 on the mount 27 is limited by a projection 250 on the base 222 travelling between two end stops 252, 254 as the base 222 pivots on the mount 27. The spring 204 remains under tension regardless of the relative angular positions of the base 222 and the mount 27.

The guide mechanism for the guide rods 200 will now be described.

Formed in the top section of the fifth clam shell 307 are two brackets 502 which each have straight bracket passages 504 which are tubular formed through them. The two bracket passages 504 are of equal dimensions. Both bracket passages 504 are circular in cross section along the length of the bracket passages 504 and have a constant diameter along the length of the bracket passages 504. The two bracket passages 504 are aligned so that their longitudinal axes 512 are co-axial. Press fitted into and held within each of the bracket passages is a slide bearing 506. Slide bearings are well known in the art and therefore their particular construction is not discussed in any detail. However, any suitable commercial slide bearing can be utilised.

Formed in the lower section of the fifth clam shell 307 is a third bracket 508 which has a straight third bracket passage 510, which is tubular, formed through it. The third bracket 508, together with the third bracket passage 510 extends the full length of the fifth clam shell 307. The third bracket passage 510 is circular in cross-section along the length of the third bracket passage 504 and has a constant diameter along the length of the third bracket passage 510. The longitudinal axis 514 of the third bracket passage 510 is parallel the longitudinal axes 512 of the first two bracket passages 502.

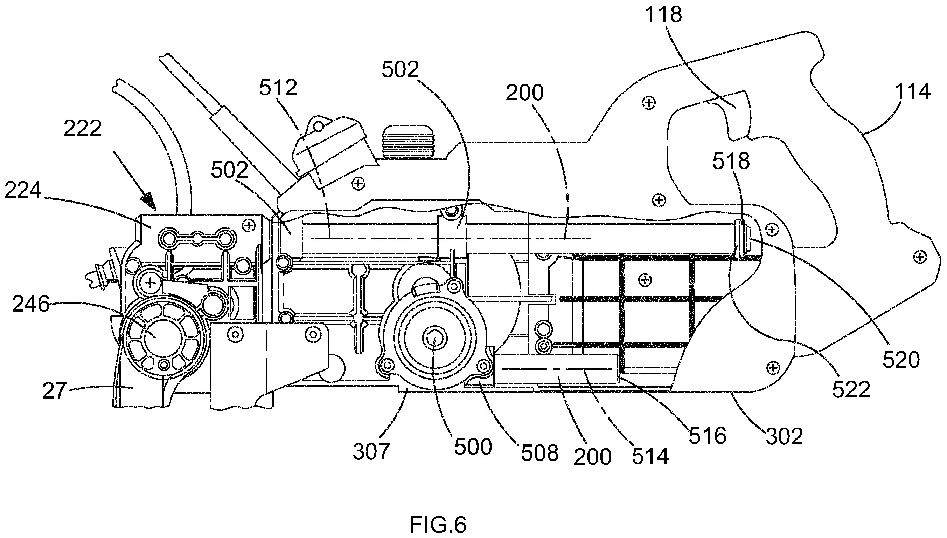

Both guide rods 200 are circular in cross section and of equal uniform diameter along their lengths. The size of the outer diameter of the two guide rods 200 corresponds to that of the inner diameter of the slide bearings 506 so that the upper rod 200 locates in a congruent manner within and is capable of sliding within the two slide bearings 506 as shown in Figure 6. The longitudinal axis of the upper rod 200 is co-axial with that that first two brackets passages 504. The size of the inner diameter of the third bracket passage 508 is slightly larger to that of outer diameter of the two guide rods so that the lower rod 200 locates within and is capable of being guided by the third slide bearing 508.

The weight of cutting unit 50 is supported by the upper guide rod 200 and the siding movement of the motor unit 50 is controlled by the upper guide rod 200 sliding within the two slide bearings 506. The lower guide rod 200 assists in guiding the cutting unit 50 as it slides along the guide rods 200 to prevent any rotational movement of the cutting unit 50 around the longitudinal axis 512 of the upper the guide rod 200.

The top guide rod 200 (as shown in Figure 6) is longer than the bottom guide rod 200. The end of the lower guide rod 200 is sealed with a cap 516 which clips onto the end of the lower guide rod 200.A radially extending washer 518 of greater diameter than the upper guide rod is attached to the end of the upper guide rod 200 using a bolt 520. A resiliently compressible rubber ring 522 is mounted on the end of the upper guide rod 200 adjacent the washer 518. The rubber ring 522 and washer provide an end stop to limit the amount of sliding movement of the cutting unit 50 along the two guide rods away from the base 22. As the cutting unit 50 is slide along the guide rods 200 away from the base, the rubber ring 522 encounters the side of the bracket 502 preventing further movement as the rubber ring cannot pass through the slide bearing 506 and therefore becomes sandwiched between the side of the bracket 502 and the washer 518. The rubber ring 522 provides a dampener to the impact of the side of the bracket 502 engaging the end stop formed by the washer 518 and rubber ring 522 of the upper guide rod 200, preventing damage to any of the components.

As can be seen in Figure 6, the spindle 500 of the motor projects between the two guide rods 200, the motor being located on one side of the guide rods and the cutting blade 124 on the other side.

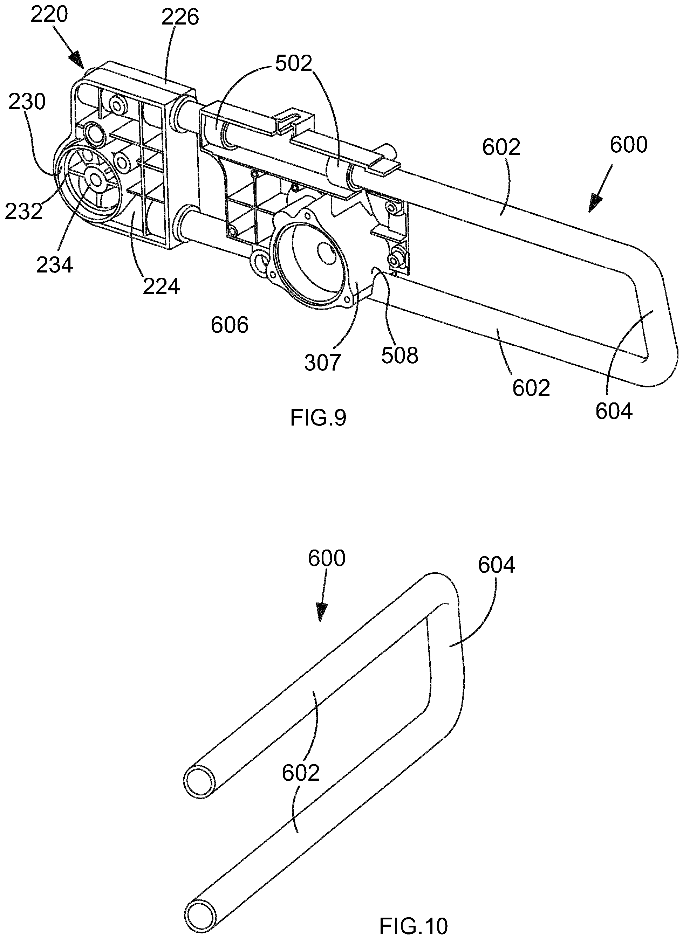

Referring to Figures 9 and 10, an alternative design of guide rods for a mitre saw outside the scope of the present invention is shown. Where the same features are used in relation to Figures 1 to 8 are present in Figures 9 and 10, the same reference numbers have been used.

The two guide rods 200 of Figures 1 to 8 have been replaced by a single guide rod 600 which has been bent to form a U shape having two parallel sides 602 joined by a perpendicular connecting section 604. The parallel sides act in the same manner as the two guide rods as described previously with the cutting unit 50 sliding along the parallel sides 602. The two ends of the guide rod 600 are clamped in the same manner in the bases 222. However, as the two parallel sides 602 are connected by a connecting section 604, there is now no need for an end stop to limit the movement of the cutting unit away from the base 222. Furthermore, as the length of the two parallel sides are the same, the length of the third bracket 508, together with the third bracket passage 510, does not need to extend the full length of the fifth clam shell 307, thus allowing a part 606 of the fifth clam shell 507 to be removed, exposing the guide rail. This allows less aluminium to be used in the manufacture of the fifth clam shell 307.

Whilst the embodiment of the present invention has been described with reference to a compound sliding mitre saw, it will be appreciated that the invention is applicable to any saw having a cutting unit slideably mounted on a base assembly which is capable of making sliding cuts.

## Claims

1. A saw comprising:
a base assembly (6, 100);
a base (222) mounted on the base assembly (6,100);
two parallel guide rods (200) which are rigidly attached to the base (222) and which extend across the base assembly (6,100);
a cutting unit (50) slideably mounted on the two guide rods (200) which is capable of being slid along the length of the guide rods (200) over the base assembly (6, 100);
wherein the length of one of the guide rods (200) is longer that the length of the other guide rod (200) so that it extends further across the base assembly (6,100);
wherein the base (222) is pivotally mounted on the base assembly (6,100) to enable the guide rods (200) and cutting unit (50) to move towards or away from the base assembly (6,100);
**characterised in that** the longer guide rod (200) locates above the shorter guide rod (200); wherein the longer guide rod (200) comprises an end stop formed on the end of the longer guide rod (200) which engages the cutting unit (50) when the cutting unit (50) is slid along the guide rods (200) away from the base (222) to limit the amount of sliding movement of the cutting unit (50) away from the base (222);
wherein the cutting unit (50) comprises a motor mount (307), the motor mount (307) having at least two brackets (502; 508), a first bracket (502) for holding a slide bearing, the longer guide rod (200) passing within the slide bearing and a second bracket (508) through which the shorter guide rod (200) passes, the cutting unit (50) being able to slide along the guide rods (200) by the brackets (502,508) and slide bearings sliding along the guide rods (200); wherein the end stop formed on the end of the longer guide rod (200) engages with the side of one of brackets (502:508) with a slide bearing of the cutting unit (50) when the cutting unit (50) is slid along the guide rods (200) away from the base (222).

2. A saw as claimed in claim 1 wherein the end stop comprises a radially extending washer (518) of greater diameter than the longer guide rod (200) attached to end of the longer guide rod (200).

3. A saw as claimed in claim 2 wherein there the end stop further comprises a resiliently compressible ring (522) mounted on the longer guide rod (200) adjacent the washer (518).

4. A saw as claimed in any of the previous claims wherein the motor mount (307) has three brackets (502; 508), two brackets (502) which each holding a slide bearing and which are aligned with each other, the longer guide rod (200) passing through both of the slide bearings, the third bracket (508) being the through which the shorter guide rod (200) passes.

5. A saw as claimed in any of the previous claims wherein the longer guide rod (200) supports the weight of the cutting unit (50) and controls the sliding movement of the cutting unit (50) as the cutting unit (50) slides along the guide rods (200).

6. A saw as claimed in any of the previous claims wherein the shorter guide rod (200) assists in guiding the cutting unit (50) along the guide rods (200) and prevents any rotational movement of the cutting unit (50) around the longer guide rod (200).

## Patentansprüche

1. Säge, umfassend:
eine Basisanordnung (6, 100);
eine an der Basisanordnung (6, 100) montierte Basis (222);
zwei parallele Führungsstangen (200), die starr an der Basis (222) angebracht sind und sich über die Basisanordnung (6, 100) erstrecken;
eine auf den zwei Führungsstangen (200) gleitend montierte Schneideinheit (50), die in der Lage ist, entlang der Länge der Führungsstangen (200) über die Basisanordnung (6, 100) geglitten zu werden;
wobei die Länge einer der Führungsstangen (200) länger ist als die Länge der anderen Führungsstange (200), sodass sie sich weiter über die Basisanordnung (6, 100) erstreckt;
wobei die Basis (222) schwenkbar auf der Basisanordnung (6, 100) montiert ist, um es den Führungsstangen (200) und der Schneideinheit (50) zu ermöglichen, sich auf die Basisanordnung (6, 100) zu oder von ihr weg zu bewegen;
**dadurch gekennzeichnet, dass** die längere Führungsstange (200) oberhalb der kürzeren Führungsstange (200) angeordnet ist;
wobei die längere Führungsstange (200) einen auf dem Ende der längeren Führungsstange (200) ausgebildeten Endanschlag umfasst, der mit der Schneideinheit (50) in Eingriff kommt, wenn die Schneideinheit (50) entlang der Führungsstangen (200) von der Basis (222) geglitten wird, um den Betrag der gleitenden Bewegung der Schneideinheit (50) von der Basis (222) weg zu begrenzen;
wobei die Schneideinheit (50) eine Motorhalterung (307) umfasst, wobei die Motorhalterung (307) mindestens zwei Klammern (502; 508) aufweist, eine erste Klammer (502) zum Halten eines Gleitlagers, wobei die längere Führungsstange (200) innerhalb des Gleitlagers verläuft, und eine zweite Klammer (508), durch welche die kürzere Führungsstange (200) verläuft, wobei die Schneideinheit (50) in der Lage ist, entlang der Führungsstangen (200) durch die Klammern (502, 508) und Gleitlager zu gleiten, die entlang der Führungsstangen (200) gleiten;
wobei der auf dem Ende der längeren Führungsstange (200) ausgebildete Endanschlag mit der Seite einer der Klammern (502, 508) mit einem Gleitlager der Schneideinheit (50) in Eingriff kommt, wenn die Schneideinheit (50) entlang der Führungsstangen (200) von der Basis (222) weg geglitten wird.

2. Säge nach Anspruch 1, wobei der Endanschlag eine sich radial erstreckende Unterlegscheibe (518) mit einem größeren Durchmesser als die längere Führungsstange (200) umfasst, die an dem Ende der längeren Führungsstange (200) angebracht ist.

3. Säge nach Anspruch 2, wobei dort der Endanschlag weiter einen elastisch zusammendrückbaren Ring (522) umfasst, der auf der längeren Führungsstange (200) angrenzend an die Unterlegscheibe (518) montiert ist.

4. Säge nach einem der vorstehenden Ansprüche, wobei die Motorhalterung (307) drei Klammern (502, 508) aufweist, wobei zwei Klammern (502) jeweils ein Gleitlager halten und miteinander ausgerichtet sind, wobei die längere Führungsstange (200) durch beide der Gleitlager verläuft, wobei die dritte Klammer (508) diejenige ist, durch welche die kürzere Führungsstange (200) verläuft.

5. Säge nach einem der vorstehenden Ansprüche, wobei die längere Führungsstange (200) das Gewicht der Schneideinheit (50) trägt und die gleitende Bewegung der Schneideinheit (50) steuert, wenn die Schneideinheit (50) entlang der Führungsstangen (200) gleitet.

6. Säge nach einem der vorstehenden Ansprüche, wobei die kürzere Führungsstange (200) das Führen der Schneideinheit (50) entlang der Führungsstangen (200) unterstützt und jede Drehbewegung der Schneideinheit (50) um die längere Führungsstange (200) verhindert.

## Revendications

1. Scie comprenant :
un ensemble de base (6, 100) ;
une base (222) montée sur l'ensemble de base (6, 100) ;
deux tiges de guidage parallèles (200) qui sont fixées de manière rigide à la base (222) et qui s'étendent à travers l'ensemble de base (6, 100) ;
une unité de coupe (50), montée de manière coulissante sur les deux tiges de guidage (200), qui peut coulisser sur toute la longueur des tiges de guidage (200) au-dessus de l'ensemble de base (6, 100) ;
dans laquelle la longueur de l'une des tiges de guidage (200) est supérieure à la longueur de l'autre tige de guidage (200) de telle sorte qu'elle s'étend plus loin à travers l'ensemble de base (6, 100) ;
dans laquelle la base (222) est montée de manière pivotante sur l'ensemble de base (6, 100) de façon à permettre aux tiges de guidage (200) et à l'unité de coupe (50) de se rapprocher ou de s'éloigner de l'ensemble de base (6, 100) ;
**caractérisée en ce que** la tige de guidage longue (200) se situe au-dessus de la tige de guidage courte (200) ;
dans laquelle la tige de guidage longue (200) comprend une butée d'extrémité, formée sur l'extrémité de la tige de guidage longue (200), qui engage l'unité de coupe (50) lorsque l'unité de coupe (50) coulisse le long des tiges de guidage (200) en direction opposée à la base (222) de façon à limiter la quantité de mouvement coulissant de l'unité de coupe (50) en direction opposée à la base (222) ;
dans laquelle l'unité de coupe (50) comprend un support de moteur (307), le support de moteur (307) comportant au moins deux consoles (502, 508), une première console (502) conçue pour maintenir un palier lisse, la tige de guidage longue (200) passant dans le palier lisse, et une seconde console (508) à travers laquelle passe la tige de guidage courte (200), l'unité de coupe (50) pouvant coulisser le long des tiges de guidage (200) au moyen des consoles (502, 508) et des paliers lisses coulissant le long des tiges de guidage (200) ;
dans laquelle la butée d'extrémité formée sur l'extrémité de la tige de guidage longue (200) s'engage avec le côté d'une des consoles (502, 508) associée à un palier lisse de l'unité de coupe (50) lorsque l'unité de coupe (50) coulisse le long des tiges de guidage (200) en direction opposée à la base (222).

2. Scie selon la revendication 1, dans laquelle la butée d'extrémité comprend une rondelle s'étendant radialement (518), d'un diamètre supérieur à la tige de guidage longue (200), fixée à une extrémité de la tige de guidage longue (200).

3. Scie selon la revendication 2, dans laquelle la butée d'extrémité comprend en outre une bague élastiquement compressible (522) montée sur la tige de guidage longue (200) en position adjacente à la rondelle (518).

4. Scie selon l'une quelconque des revendications précédentes, dans laquelle le support de moteur (307) comporte trois consoles (502, 508), deux consoles (502) qui maintiennent chacune un palier lisse et qui sont alignées l'une avec l'autre, la tige de guidage longue (200) passant à travers les deux paliers lisses, la troisième console (508) étant celle à travers laquelle passe la tige de guidage courte (200).

5. Scie selon l'une quelconque des revendications précédentes, dans laquelle la tige de guidage longue (200) supporte le poids de l'unité de coupe (50) et commande le mouvement coulissant de l'unité de coupe (50) pendant que l'unité de coupe (50) coulisse le long des tiges de guidage (200).

6. Scie selon l'une quelconque des revendications précédentes, dans laquelle la tige de guidage courte (200) aide à guider l'unité de coupe (50) le long des tiges de guidage (200) et empêche tout mouvement de rotation de l'unité de coupe (50) autour de la tige de guidage longue (200).
